# EUROPÄISCHE PATENTSCHRIFT

(11) **EP 4 017 764 B1**
(45) Veröffentlichungstag und Bekanntmachung des Hinweises auf die Patenterteilung: **01.10.2025**
(21) Anmeldenummer: 20764301.6
(22) Anmeldetag: 11.08.2020
(51) Int. Cl.: B60R 11/04, B60R 11/00

(54) **DACHMODUL FÜR EIN KRAFTFAHRZEUG, UMFASSEND EINE EINE DACHBLENDE BILDENDE DACHHAUT**
ROOF MODULE FOR A MOTOR VEHICLE, COMPRISING A ROOF PANEL FORMING A ROOF TRIM
MODULE DE TOIT POUR VÉHICULE AUTOMOBILE, COMPRENANT UN PANNEAU DE TOIT FORMANT UNE GARNITURE DE TOIT

(30) Priorität: 19.08.2019 DE 102019122214
(43) Veröffentlichungstag der Anmeldung: 29.06.2022
(73) Patentinhaber: Webasto SE, 82131 Stockdorf (DE)
(72) Erfinder: HUELSEN, Michael, 82131 Stockdorf (DE); LEGLER, Dirk, 82131 Stockdorf (DE); DEPPE, Michael, 82131 Stockdorf (DE); THANNHEIMER, Johannes, 82131 Stockdorf (DE); RUDOLPH, Thomas, 82131 Stockdorf (DE); LINDNER, Thomas, 82131 Stockdorf (DE)
(74) Vertreter: advotec.
(86) Internationale Anmeldenummer: PCT/EP2020/072481
(87) Internationale Veröffentlichungsnummer: WO 2021/032533

(56) Entgegenhaltungen:
- JP-A- 2015 107 764
- JP-A- S61 277 206
- US-A1- 2019 202 371

## Beschreibung

Die Erfindung betrifft ein Dachmodul für ein Kraftfahrzeug, insbesondere für einen Personenkraftwagen, umfassend die Merkmale des Oberbegriffs des Patentanspruchs 1.

Ein derartiges Dachmodul ist aus der Praxis bekannt (wie z.B. aus JP 2015 107764 A) und stellt insbesondere bei einem Personenkraftwagen ein Fahrzeugdach dar, das als separates Bauteil auf eine einen Fahrzeugrohbau bildende Fahrzeugkarosserie aufsetzbar ist. Bekannte Dachmodule können als Festdach ausgebildet sein, das zur Ausbildung eines Panoramadachs einen transparenten Abschnitt aufweist, der einen Dachdurchsichtsbereich bildet. Der Festdachabschnitt ist in der Montagestellung des Dachmoduls, das heißt im mit der Fahrzeugkarosserie verbundenen Zustand des Dachmoduls fest bzw. unbeweglich gegenüber der Fahrzeugkarosserie angeordnet. Alternativ oder zusätzlich kann das Dachmodul ein Dachöffnungssystem aufweisen, das ein bewegliches Deckelelement umfasst, mittels dessen eine Dachöffnung wahlweise geöffnet oder geschlossen werden kann. Das Dachmodul umfasst des Weiteren eine Dachhaut, die die Dachaußenhaut bzw. äußere Sichtfläche bildet und zur Ausbildung des Dachdurchsichtsbereichs abschnittsweise transparent ausgeführt ist und bis an die Dachöffnung heranreichen kann. Außerhalb des Dachdurchsichtsbereichs bzw. außerhalb der Dachöffnung bildet die Dachhaut eine Dachblende, die Trägerelemente und sonstige Funktionselemente des Dachmoduls, die das Erscheinungsbild stören könnten, verblendet.

Des Weiteren ist es bekannt, an Fahrzeugdächern Sensormodule anzuordnen, die ein autonomes bzw. teilautonomes Fahren des betreffenden Kraftfahrzeuges ermöglichen. Bei bekannten Kraftfahrzeugen sind diese Sensormodule, die Umfeldsensoren zur Überwachung und Erfassung der Fahrzeugumgebung aufweisen, auch am Fahrzeugdach befestigt, da das Fahrzeugdach in der Regel die höchste Erhebung eines Fahrzeuges ist, von der aus das Fahrzeugumfeld gut einsehbar ist. Die Sensormodule sind bisher als Aufsatz ausgebildet, der auf das betreffende Fahrzeugdach aufgesetzt ist. Dies führt aber zu einem optischen Erscheinungsbild, das in der Regel nicht den Kundenanforderungen entspricht.

Der Erfindung liegt die Aufgabe zugrunde, ein Dachmodul für ein Kraftfahrzeug, insbesondere für einen Personenkraftwagen, zu schaffen, das in integrierter Weise zur Nutzung an einem autonom bzw. teilautonom fahrenden Kraftfahrzeug geeignet ist und gleichzeitig hohen optischen Ansprüchen genügt.

Diese Aufgabe ist erfindungsgemäß durch das Dachmodul mit den Merkmalen des Patentanspruchs 1 gelöst.

Das Dachmodul nach der Erfindung umfasst also ein Sensormodul, das mit einem Umfeldsensor zur Erfassung eines Fahrzeugumfelds versehen ist und das außerhalb eines Dachdurchsichtsbereichs und/oder einer Dachöffnung angeordnet ist und dort dann von der Dachhaut überdeckt ist, die auch den Dachdurchsichtsbereich bildet und/oder an die Dachöffnung grenzt.

Das im Sinne der Erfindung ausgebildete Dachmodul stellt somit in integrierter Weise ein Fahrzeugdach dar, in dem die zum autonomen bzw. teilautonomen Fahren des betreffenden Fahrzeugs erforderlichen Komponenten so angeordnet sind, dass ein transparenter Festdachabschnitt und/oder eine Dachöffnung realisierbar ist, die mittels eines beweglichen Deckelelements eines Dachöffnungssystems wahlweise geöffnet oder geschlossen werden kann. Mit der Erfindung wird ein Sensordach bzw. Roof Sensor Module (RSM) bereitgestellt, das sowohl das autonome bzw. teilautonome Fahren des betreffenden Fahrzeugs ermöglicht als auch mit einem transparenten Festdachabschnitt und/oder einem öffenbaren Dachabschnitt versehen ist, wobei die Dachhaut in optisch ansprechender Weise auch über das mindestens eine Sensormodul reicht. Im autonomen Fahrbetrieb fährt das betreffende Fahrzeug selbsttätig, wobei hierzu erforderliche Mittel in dem Dachmodul nach der Erfindung integriert sind. Im teilautonomen Fahrbetrieb stellt das Dachmodul nach der Erfindung Fahrassistenzsysteme zur Verfügung.

Das Dachmodul nach der Erfindung kann eine Baueinheit bilden, in der alle funktionalen Elemente ingetriert sind und die mit einer Fahrzeugkarosserie bzw. einem Fahrzeugrohbau zur Ausbildung des Fahrzeugdachs verbindbar ist. Es kann zum Einsatz bei einem Personenkraftwagen oder auch bei einem Nutzfahrzeug ausgelegt sein.

Damit der Dachdurchsichtsbereich bzw. die mittels des Deckelelements verschließbare Dachöffnung möglichst groß ausgebildet sein kann, ist das Sensormodul des Dachmoduls nach der Erfindung vorzugsweise in einem Eckbereich des Dachmoduls angeordnet. Die Dachhaut, die den Dachdurchsichtsbereich bildet und/oder an die Dachöffnung grenzt, ist bei dieser Ausführungsform also bis in den betreffenden Eckbereich des Dachmoduls gezogen, so dass das dort angeordnete Sensormodul oben bzw. deren Oberseite von der Dachhaut verblendet ist.

Alternativ kann das Sensormodul auch bugseitig oder heckseitig und bezogen auf die vertikale Dachlängsmittelebene mittig an dem Dachmodul angeordnet sein und in diesem Bereich oben von der Dachhaut verblendet sein. Denkbar ist es auch, dass das Sensormodul in einem bezogen auf eine Fahrzeuglängsmittelebene seitlich angeordneten Randbereich des Dachmoduls angeordnet ist.

Um das Sensormodul gut vor Umwelteinflüssen zu schützen, kann die Dachhaut im Bereich des Sensormoduls durchgängig ausgebildet sein und in einem betreffenden Bereich transparent für ein von dem Umfeldsensor genutztes Signal sein. Vorzugsweise ist dieser Bereich transparent für elektromagnetische Strahlung in einem Wellenlängenbereich zwischen 200 nm und 2000 nm und insbesondere auch für Radarstrahlung.

Grundsätzlich kann der Umfeldsensor des Sensormoduls in vielfältiger Weise ausgebildet sein und insbesondere einen LiDAR-Sensor, einen Radar-Sensor, einen optischen Sensor, wie eine Kamera, und/oder dergleichen umfassen. LiDAR-Sensoren arbeiten in einem Wellenlängenbereich von 905 nm oder auch von etwa 1550 nm. Der Werkstoff der Dachhaut, der für den Umfeldsensor transparent ist, muss also in Abhängigkeit von der genutzten Wellenlänge ausgewählt werden.

Bei einer speziellen Ausführungsform des Dachmoduls nach der Erfindung bildet die Dachhaut eine Stufe, an deren Stirnseite ein Durchsichtsbereich für den Umfeldsensor ausgebildet ist, welcher transparent für das von dem Umfeldsensor genutzte Signal sein muss. Eine derartige Stufe ist in optisch harmonischer Weise in eine geschlossen ausgeführte Dachhaut integrierbar.

Zur Lagerung und positionsgenauen Anordnung des Sensormoduls ist erfindungsgemäß ein Dachrahmen vorgesehen, der integraler Bestandteil des Dachmoduls ist und an dem auch die Dachhaut befestigt ist. Der Dachrahmen bildet eine Trägerstruktur des Dachmoduls.

Bei einer speziellen Ausführungsform des Dachmoduls nach der Erfindung, das einen transparenten Festdachabschnitt aufweist, der von der Dachhaut gebildet ist, ist die Dachhaut einstückig gefertigt, so dass der Bereich der Dachhaut, der das Sensormodul überdeckt, und der Bereich der Dachhaut, der den transparenten Dachabschnitt bildet, aus dem gleichen Bauteil gebildet sind. Denkbar ist es auch, dass die geschlossene Dachhaut aus mehreren aneinander grenzenden Dachhautelementen gebildet ist, deren Außenseiten insbesondere miteinander fluchten bzw. bündig ineinander übergehen. Um unabhängig von der Stellung des Deckelelements die Funktion des Sensormoduls nicht zu beeinträchtigen, ist das Deckelelement bei einer zweckmäßigen Ausführungsform des Dachmoduls nach der Erfindung in einer Öffnungsstellung oberhalb des Sensormoduls angeordnet. Das Deckelelement liegt damit stets außerhalb des Blickfelds des Umfeldsensors des Sensormoduls.

Eine bevorzugte Ausführungsform des Dachmoduls nach der Erfindung umfasst vier Sensormodule, die jeweils in einem Eckbereich des Dachmoduls angeordnet sind und von der Dachhaut überdeckt sind. Durch die vier Sensormodule, die in den Eckbereichen des Dachmoduls angeordnet sind, kann das Fahrzeugumfeld zumindest nahezu komplett überwacht werden. Es können auch nur zwei Sensormodule in den beiden bugseitigen oder in den beiden heckseitigen Eckbereichen angeordnet sein. Zusätzlich oder alternativ kann in seitlichen Randbereichen jeweils ein Sensormodul angeordnet sein. Auch eine Anordnung eines Sensormoduls in einem bugseitigen oder heckseitigen Randbereich ist denkbar.

Zusätzlich zur Verblendung des Sensormoduls nach oben verblendet die Dachhaut vorzugsweise auch weitere Funktionselemente, die für ein autonomes oder teilautonomes Fahren des betreffenden Fahrzeugs in dem Dachmodul angeordnet sind und die ein Antennenelement, Elektronikelemente und/oder Thermomanagementelemente umfassen können.

Des Weiteren kann in das Dachmodul nach der Erfindung ein Signallicht integriert sein, mittels dessen ein Betriebsmodus des betreffenden Fahrzeugs anzeigbar ist und das bugseitig oder heckseitig angeordnet und zumindest oben von der Dachhaut verblendet ist. Das Signallicht ist insbesondere ein so genanntes ADS (Autonomous Drive Signal)-Licht, das anzeigt, ob sich das betreffende Fahrzeug in einem autonomen Fahrmodus befindet. Auch weitere Kommunikationsmittel zur Kommunikation des Fahrzeugs mit anderen Verkehrsteilnehmern, beispielsweise ein Lautsprecher und/oder ein Mikrofon, können in das Dachmodul nach der Erfindung integriert sein.

Bei einer speziellen Ausführungsform des Dachmoduls nach der Erfindung bildet die Dachhaut, die das Sensormodul überdeckt, einen opaken Steg, der sich mittig in Dachlängsrichtung erstreckt und zwei Dachdurchsichtsbereiche voneinander trennt. Damit ist der rechten und der linken Fahrzeugseite jeweils ein separater Dachdurchsichtsbereich zugeordnet. Der opake Steg kann sich auch in Dachquerrichtung erstrecken. Grundsätzlich kann der Steg zur Führung und Aufnahme von Kabeln und/oder Leitungen dienen. Hierzu kann der Steg mit mindestens einem Kanal bzw. Schacht und/oder auch mit entsprechenden Befestigungsmitteln versehen sein.

Weitere Vorteile und vorteilhafte Ausgestaltungen des Gegenstandes der Erfindung sind der Beschreibung, der Zeichnung und den Patentansprüchen entnehmbar.

Ausführungsbeispiele eines Dachmoduls nach der Erfindung sind in der Zeichnung schematisch vereinfacht dargestellt und werden in der nachfolgenden Beschreibung näher erläutert. Es zeigt:
- Figur 1: eine Draufsicht auf ein Kraftfahrzeug mit einem Dachmodul nach der Erfindung;
- Figur 2: einen Längsschnitt durch das Dachmodul nach Figur 1 entlang der Linie II-II in Figur 1;
- Figur 3: einen Figur 2 entsprechenden Längsschnitt durch eine zweite Ausführungsform eines Dachmoduls;
- Figur 4: eine Draufsicht auf eine dritte Ausführungsform eines Dachmoduls nach der Erfindung;
- Figur 5: einen Längsschnitt durch das Dachmodul nach Figur 4 entlang der Linie V-V in Figur 4; und
- Figur 6: eine Draufsicht auf eine vierte Ausführungsform eines Dachmoduls nach der Erfindung.

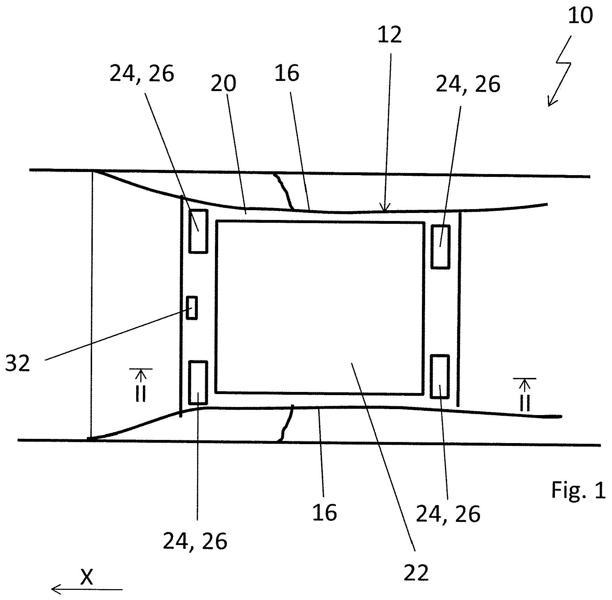

In Figur 1 ist ein Kraftfahrzeug 10 dargestellt, welches als Personenkraftwagen ausgeführt ist und eine einen Rohbau darstellende Fahrzeugkarosserie umfasst, auf welche ein Dachmodul 14 aufgesetzt ist. Das Dachmodul 14 bildet damit ein Fahrzeugdach, welches von seitlichen Dachlängsholmen 16 begrenzt ist, welche Bestandteile der Fahrzeugkarosserie 12 sind. Ein Pfeil X stellt eine Vorwärtsfahrtrichtung des Kraftfahrzeugs 10 dar.

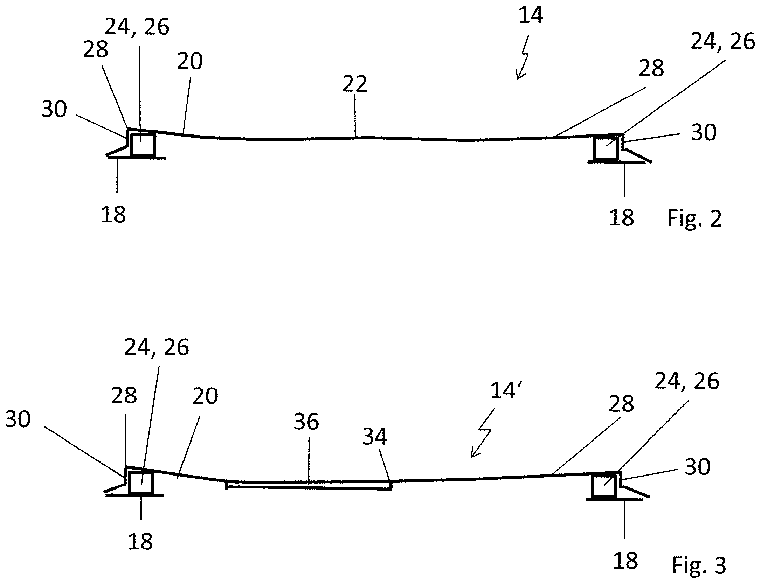

Das in Figur 2 in Alleinstellung dargestellte Dachmodul 14 ist ein Sensordachmodul bzw. ein Roof Sensor Module (RSM), welches mit Vorrichtungen ausgestattet ist, die ein autonomes Fahren des Kraftfahrzeugs 10 ermöglichen.

Das Dachmodul 14 umfasst einen Dachrahmen 18, welcher eine Trägerstruktur bildet und eine Schnittstelle des Dachmoduls 14 zu der Fahrzeugkarosserie 12 darstellt. Zudem umfasst das Dachmodul 14 eine Dachhaut 20, welche in einem zentralen Bereich einen transparenten Festdachabschnitt 22 ausbildet, durch den Licht in einen Fahrzeuginnenraum eintreten kann. Die Dachhaut 20 ist an dem Dachrahmen 18 fixiert.

In seinen vier Eckbereichen weist das Dachmodul 14 jeweils ein Sensormodul 24 auf, welches mit einem Umfeldsensor 26 versehen ist, mittels dessen zur Realisierung eines autonomen Fahrens des Kraftfahrzeugs 10 die Fahrzeugumgebung erfasst werden kann. Durch Auswertung der Messsignale der Umfeldsensoren 26 mittels einer Steuereinrichtung des Kraftfahrzeugs 10 ist damit eine jeweilige Verkehrssituation ermittelbar, so dass sich das Kraftfahrzeug 10 autonom an die Verkehrssituation anpassen und entsprechend verhalten kann. Die Sensormodule 24 sind jeweils auf dem Dachrahmen 18 angeordnet.

Die Umfeldsensoren 26 der Sensormodule 24 können jeweils in vielfältiger Weise ausgebildet sein und beispielsweise einen LiDAR-Sensor, einen Radar-Sensor, eine Kamera (Mono-/Multi-/Multi-Fokal- und/oder Stereo-Kamera) und/oder einen sonstigen geeigneten Sensor umfassen.

Die Dachhaut 20, welche den transparenten Festdachabschnitt 22 ausbildet, erstreckt sich bis in die Eckbereiche des Dachmoduls 14, so dass die Sensormodule 24 von der Dachhaut 20 überdeckt sind. Im vorliegenden Fall ist die Dachhaut 20 einstückig ausgebildet.

Um den Umfeldsensoren 26 der Sensormodule 24 eine Überwachung des Fahrzeugumfelds zu ermöglichen, bildet die Dachhaut 20 im Bereich der Sensormodule 24 jeweils eine Stufe 28 aus, an deren Stirnseite 30 ein Dachdurchsichtsbereich für den betreffenden Umfeldsensor 26 ausgebildet ist. Die Stirnseiten der Stufen 28 sind also für die von den Umfelsensoren 26 genutzten Wellenlängen transparent. Diese Wellenlängen liegen beispielsweise in einem Bereich zwischen 200 nm und 2000 nm. Bei Verwendung eines LiDAR-Sensors als Umfeldsensor wird insbesondere eine Wellenlänge von 905 nm und/oder eine Wellenlänge von 1550 nm eingesetzt.

Anstatt einer Stufe kann auch eine stark abfallende Dachfläche im Bereich des jeweiligen Sensormoduls ausgebildet sein, die einen Durchsichtsbereich für den jeweiligen Umfeldsensor bildet.

Durch die Anordnung der Sensormodule 24 in den Eckbereichen sind diese weit voneinander beabstandet und außerhalb des von dem transparenten Festdachabschnitt gebildeten Durchsichtsbereich angeordnet. Die Sensormodule 24 haben so voneinander auch einen weiten Abstand, der in Dachquerrichtung mindestens etwa 90 cm und in Dachlängsrichtung mindestens etwa 120 cm beträgt.

Zusätzlich weist das Dachmodul 14 in einem bugseitigen Bereich bezogen auf eine vertikale Dachlängsmittelebene mittig ein so genanntes ADS-Licht 32 auf, welches die Fahrzeugumgebung darüber informieren kann, ob sich das Kraftfahrzeug 10 in einem autonomen Fahrmodus befindet.

In Figur 3 ist ein Dachmodul 14' dargestellt, das eine alternative Ausführungsform darstellt und sich von dem in den Figuren 1 und 2 dargestellten Dachmodul dadurch unterscheidet, dass es eine Dachöffnung 34 ausbildet, welche mittels eines Deckelelements 36, das Bestandteil eines Dachöffnungssystems ist, wahlweise geschlossen oder zumindest teilweise freigegeben werden kann. An die Dachöffnung 34 schließt sich eine Dachhaut 20 an, welche entsprechend der Dachhaut der Ausführungsform nach den Figuren 1 und 2 in den Eckbereichen des Dachmoduls 14' Sensormodule 24 überdeckt, die jeweils einen Umfeldsensor 26 umfassen und auf einem Dachrahmen 18 angeordnet sind, der ebenfalls Bestandteil des Dachmoduls 14' ist und eine Schnittstelle zu einer Fahrzeugkarosserie bildet.

Das Deckelelement 36 ist ein Deckelelement eines Spoilerdachs und in seiner voll geöffneten Stellung oberhalb von den heckseitig angeordneten Sensormodulen 24 und außerhalb von deren Sichtfeld angeordnet. Das Sichtfeld der Umfeldsensoren 26 dieser Sensormodule 24 wird auch in dieser Öffnungsstellung des Deckelelements 36 nicht abgeschattet.

Im Übrigen ist das Dachmodul nach Figur 3 entsprechend dem Dachmodul nach den Figuren 1 und 2 ausgebildet, weshalb der Übersichtlichkeit halber auf eine weitere konkrete Beschreibung verzichtet wird.

Bei einer weiteren, nicht näher dargestellten Ausführungsform kann die Dachhaut 20 auch mehrteilig ausgebildet sein, wobei ein transparenter Festdachabschnitt von einem Dachhautelement und der sich hieran anschließende Abschnitt von einem weiteren Dachhautelement gebildet ist, das sich bis über die Sensormodule 24 erstreckt.

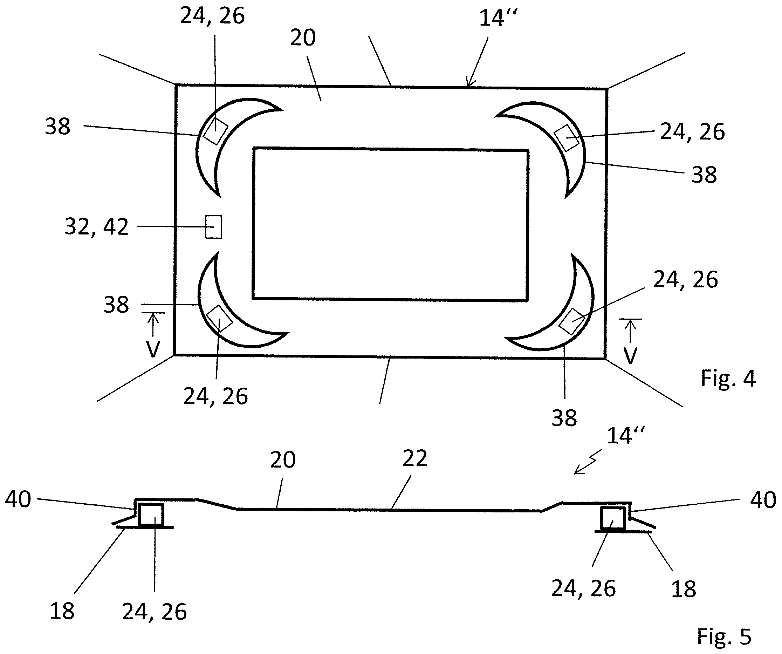

In den Figuren 4 und 5 ist ein Dachmodul 14" dargestellt, das eine weitere Ausführungsform eines Dachmoduls nach der Erfindung ist und bei dem die Dachhaut 20 in den Eckbereichen des Dachmoduls 14" jeweils ein in der Draufsicht sichelförmiges Blendenelement bzw. einen sichelförmigen Blendenabschnitt bildet, der oberhalb eines betreffenden Sensormoduls 24 mit Umfeldsensor 26 angeordnet ist. Die sichelförmigen Blendenabschnitte 38 haben jeweils eine äußere bogenförmige Stirnseite 40, welche einen Durchsichtsbereich für den betreffenden Umfeldsensor 26 bildet, das heißt transparent für die von dem Umfeldsensor 26 genutzte Wellenlänge ist.

Zwischen den beiden bugseitigen Blendenabschnitten 38 bildet die Dachhaut 20 ein Leuchtfeld 42 für ein ADS-Licht aus, das der Fahrzeugumgebung Informationen hinsichtlich des Betriebsmodus des Kraftfahrzeugs 10 liefert, das als autonom fahrendes Fahrzeug ausgebildet ist.

Zudem kann im Bereich des ADS-Lichts hinter einer abfallenden Dachfläche ein Sensormodul mit einer Kamera oder dergleichen angeordnet sein.

Die Blendenabschnitte 38 begrenzen einen zentralen, ebenfalls von der Dachhaut 20 gebildeten Festdachabschnitt 22, der zumindest bereichsweise transparent ist.

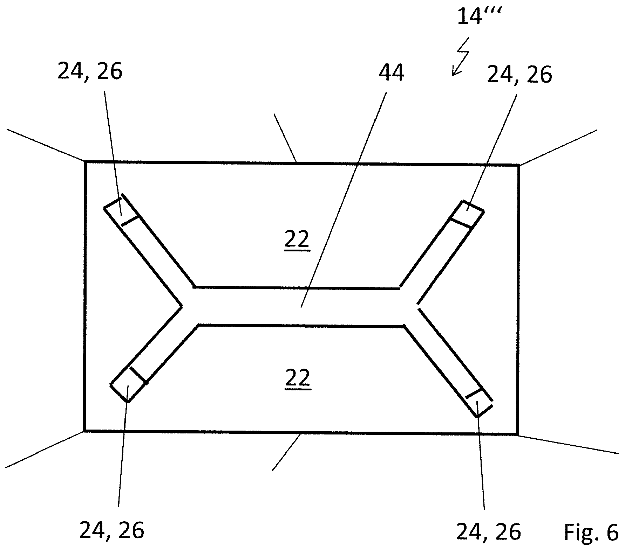

In Figur 6 ist eine Draufsicht auf ein Dachmodul 14‴ gezeigt, welches zwei transparente Festdachabschnitte 22 umfasst, die beidseits eines sich in Fahrzeuglängsrichtung erstreckenden Mittelstegs 44 angeordnet sind, welcher, wie auch die transparenten Festdachabschnitte 22, von einer Dachhaut 20 gebildet ist. Die Dachhaut 20 erstreckt sich wie bei den oben beschriebenen Ausführungsformen bis in die Eckbereiche des Dachmoduls 14‴ und überdeckt dort jeweils ein Sensormodul 24, welches einen Umfeldsensor 26 in Form eines LiDAR-Sensors oder dergleichen umfasst. In dem Mittelsteg 44 sind Kabel und Leitungen aufgenommen, für die ein Kanal/Schacht und/oder Befestigungsmittel vorgesehen sein können/kann.

Die Dachhaut 20, die die transparenten Festdachabschnitte 22 und die Blende bildet, die wiederum den Mittelsteg 44 als auch die Verblendungen der Sensormodule 24 ausbildet, kann als Einkomponenten- oder Mehrkomponenten-Spritzgießteil ausgebildet sein und im Bereich der Sensormodule 24 jeweils transparent für die von den Umfeldsensoren 26 genutzte Wellenlänge sein. Die Dachhaut kann auch Glaselemente umfassen.

### Bezugszeichenliste

- 10: Kraftfahrzeug
- 12: Fahrzeugkarosserie
- 14, 14', 14", 14‴: Dachmodul
- 16: Dachlängsholm
- 18: Dachrahmen
- 20: Dachhaut
- 22: transparenter Festdachabschnitt
- 24: Sensormodul
- 26: Umfeldsensor
- 28: Stufe
- 30: Stirnseite
- 32: ADS-Licht
- 34: Dachöffnung
- 36: Deckelelement
- 38: Blendenabschnitt
- 40: Stirnseite
- 42: Leuchtfeld
- 44: Mittelsteg

## Patentansprüche

1. Dachmodul für ein Kraftfahrzeug, insbesondere für einen Personenkraftwagen, und zur Anbindung an eine Fahrzeugkarosserie (12), wobei das Dachmodul eine Baueinheit bildet, die zur Ausbildung eines Fahrzeugdachs mit der Fahrzeugkarosserie (12) verbindbar ist, wobei das Dachmodul einen transparenten Festdachabschnitt (22), der einen Dachdurchsichtsbereich bildet und in Montagestellung des Dachmoduls fest gegenüber der Fahrzeugkarosserie (12) angeordnet ist, und/oder ein Dachöffnungssystem mit einem beweglichen Deckelelement (36), mittels dessen eine Dachöffnung (34) wahlweise geöffnet oder geschlossen werden kann, sowie eine geschlossene Dachhaut (20) umfasst, die den Dachdurchsichtsbereich bildet und/oder an die Dachöffnung (34) grenzt und die außerhalb des Dachdurchsichtsbereichs und/oder der Dachöffnung (34) eine Dachblende bildet, umfassend mindestens ein Sensormodul (24), das mindestens einen Umfeldsensor (26) zur Erfassung eines Fahrzeugumfelds umfasst und das außerhalb des Dachdurchsichtsbereichs und/oder der Dachöffnung (34) angeordnet ist und von der Dachhaut (20) überdeckt ist,
**dadurch gekennzeichnet, dass**
das Sensormodul (24) auf einem Dachrahmen (18) angeordnet ist, der integraler Bestandteil des Dachmoduls ist, der eine Trägerstruktur des Dachmoduls bildet und eine Schnittstelle des Dachmoduls zu einer Fahrzeugkarosserie darstellt und an dem die Dachhaut (20) befestigt ist.

2. Dachmodul nach Anspruch 1, **dadurch gekennzeichnet, dass** das Sensormodul (24) in einem Eckbereich und/oder in einem bezogen auf eine vertikale Dachlängsmittelebene seitlichen Randbereich oder in einem fahrzeugmittigen Bugbereich oder Heckbereich des Dachmoduls angeordnet ist.

3. Dachmodul nach Anspruch 1, **dadurch gekennzeichnet, dass** das Sensormodul (24) bezogen auf eine vertikale Dachlängsmittelebene mittig und bugseitig oder heckseitig angeordnet ist.

4. Dachmodul nach einem der Ansprüche 1 bis 3, **dadurch gekennzeichnet, dass** die Dachhaut (20) zumindest bereichsweise transparent für ein von dem Umfeldsensor (26) genutztes Signal ist.

5. Dachmodul nach einem der Ansprüche 1 bis 4, **dadurch gekennzeichnet, dass** die Dachhaut (20) eine Stufe (28) bildet, an deren Stirnseite (40) ein Durchsichtsbereich für den Umfeldsensor (26) ausgebildet ist, oder eine Erhebung ausbildet, an der ein Durchsichtsbereich für den Umfeldsensor ausgebildet ist, oder eine Dachschräge mit einem Durchsichtsbereich für den Umfeldsensor ausbildet.

6. Dachmodul nach einem der Ansprüche 1 bis 5, **dadurch gekennzeichnet, dass** ein Dachhautabschnitt, der das Sensormodul (24) überdeckt, einstückig mit dem transparenten Festdachabschnitt (22) gefertigt ist.

7. Dachmodul nach einem der Ansprüche 1 bis 6, **dadurch gekennzeichnet, dass** das Deckelelement (36) in einer Öffnungsstellung oberhalb des Sensormoduls (24) angeordnet ist.

8. Dachmodul nach einem der Ansprüche 1 bis 7, **gekennzeichnet durch** mehrere Sensormodule, die von der Dachhaut (20) überdeckt sind, wobei insbesondere vier Sensormodule (24) jeweils in einem Eckbereich des Dachmoduls angeordnet sind oder zwei Sensormodule jeweils in einem vorderen oder hinteren Eckbereich des Dachmoduls angeordnet sind und/oder zwei Sensormodule jeweils in einem seitlichen Randbereich des Dachmoduls angeordnet sind und/oder zwei Sensormodule jeweils in einem in Dachquerrichtung verlaufenden Randbereich des Dachmoduls mittig angeordnet sind.

9. Dachmodul nach einem der Ansprüche 1 bis 8, **dadurch gekennzeichnet, dass** die Dachhaut (20) Funktionselemente für ein autonomes Fahren des betreffenden Fahrzeugs verblendet, die ein Antennenelement, Elektronikelemente und/oder Thermomanagementelemente umfassen.

10. Dachmodul nach einem der Ansprüche 1 bis 9, **gekennzeichnet durch** ein Signallicht (32), mittels dessen ein Betriebsmodus des betreffenden Fahrzeugs anzeigbar ist und das bugseitig oder heckseitig angeordnet und zumindest oben von der Dachhaut (20) verblendet ist.

11. Dachmodul nach einem der Ansprüche 1 bis 10, **gekennzeichnet durch** einen akustischen Signalgeber und/oder ein Mikrofon zur Kommunikation des Fahrzeugs mit der Fahrzeugumgebung in einem autonomen Fahrmodus.

12. Dachmodul nach einem der Ansprüche 1 bis 11, **dadurch gekennzeichnet, dass** die Dachhaut (20), die das Sensormodul (24) überdeckt, einen opaken Steg (44) ausbildet, der sich mittig in Dachlängsrichtung oder Dachquerrichtung erstreckt und zwei Dachdurchsichtsbereiche voneinander trennt.

13. Kraftfahrzeug, umfassend ein Dachmodul nach einem der Ansprüche 1 bis 12.

## Claims

1. A roof module for a motor vehicle, in particular for a passenger car, and for being connected to a vehicle body (12), the roof module forming a structural unit configured to be connected to the vehicle body (12) so as to form the vehicle roof, the roof module comprising a transparent fixed roof portion (22), which forms a see-through roof area and which is immobile relative to the vehicle body (12) when the roof module is in the installed position, and/or a roof opening system comprising a mobile lid element (36), by means of which a roof opening (34) can be opened or closed at will, and a closed roof skin (20), which forms the see-through roof area and/or is adjacent to the roof opening (34) and forms a roof cover outside of the see-through roof area and/or the roof opening (34), the roof module comprising at least one sensor module (24), the sensor module (24) comprising at least one environment sensor (26) for detecting a vehicle environment and being disposed outside of the see-through roof area and/or the roof opening (34) and being covered by the roof skin (20), **characterized in that** the sensor module (24) is disposed on a roof frame (18) which is an integral part of the roof module and which forms a support structure of the roof module and which forms an interface of the roof module to a vehicle body and to which the roof skin (20) is attached.

2. The roof module according to claim 1, **characterized in that** the sensor module (24) is disposed in a corner area and/or in a lateral edge area relative to a vertical longitudinal center plane of the roof or in a front area or a rear area of the roof module in the center of the vehicle.

3. The roof module according to claim 1, **characterized in that** the sensor module (24) is disposed centrally relative to a vertical longitudinal center plane of the roof and in the front or in the rear.

4. The roof module according to any one of claims 1 to 3, **characterized in that** at least part of the roof skin (20) is transparent to a signal used by the environment sensor (26).

5. The roof module according to any one of claims 1 to 4, **characterized in that** the roof skin (20) forms a step (28), on whose face (40) a see-through portion for the environment sensor (26) is formed, or a prominence, on which a see-through portion for the environment sensor is formed, or a roof slope, which has a see-through portion for the environment sensor.

6. The roof module according to any one of claims 1 to 5, **characterized in that** a roof skin portion covering the sensor module (24) is produced in one piece with the transparent fixed roof portion (22).

7. The roof module according to any one of claims 1 to 6, **characterized in that** the lid element (36) is disposed above the sensor module (24) when in an open position.

8. The roof module according to any one of claims 1 to 7, **characterized by** multiple sensor modules which are covered by the roof skin (20), in particular four sensor modules (24) each being disposed in a corner area of the roof module or two sensor modules each being disposed in a front or rear corner area of the roof module and/or two sensor modules each being disposed in a lateral edge area of the roof module and/or two sensor modules each being disposed centrally in an edge area of the roof module extending in the transverse direction of the roof.

9. The roof module according to any one of claims 1 to 8, **characterized in that** the roof skin (20) covers functional elements for autonomous driving of the vehicle in question, said functional elements comprising an antenna element, electronic elements and/or thermal management elements.

10. The roof module according to any one of claims 1 to 9, **characterized by** a signal light (32) by means of which an operating mode of the vehicle in question can be indicated and which is disposed at the front or at the rear and is covered by the roof skin (20) at least at the top.

11. The roof module according to any one of claims 1 to 10, **characterized by** an acoustic signaling device and/or a microphone for the communication of the vehicle with the vehicle surroundings when in an autonomous driving mode.

12. The roof module according to any one of claims 1 to 11, **characterized in that** the roof skin (20) covering the sensor module (24) forms an opaque web (44) centrally extending in the longitudinal direction of the roof or in the transverse direction of the roof and separating two see-through roof areas from each other.

13. A motor vehicle comprising a roof module according to any one of claims 1 to 12.

## Revendications

1. Module de toit pour un véhicule à moteur, notamment pour une voiture particulière, et pour être relié à une carrosserie de véhicule (12), le module de toit formant une unité structurelle configurée pour être reliée à la carrosserie de véhicule (12) de manière à former un toit du véhicule, le module de toit comprenant une partie de toit fixe (22) transparente, qui forme une zone de toit transparente et qui est immobile par rapport à la carrosserie de véhicule (12) lorsque le module de toit est en position installée, et/ou un système d'ouverture de toit comprenant un élément de couvercle (36) mobile, au moyen duquel une ouverture de toit (34) peut être ouverte ou fermée à volonté, et une peau de toit (20) fermée, qui forme la zone de toit transparente et/ou est adjacente à l'ouverture de toit (34) et forme une couverture de toit à l'extérieur de la zone de toit transparente et/ou de l'ouverture de toit (34), le module de toit comprenant au moins un module capteur (24), le module capteur (24) comprenant au moins un capteur d'environnement (26) pour détecter un environnement du véhicule et étant disposé à l'extérieur de la zone de toit transparente et/ou de l'ouverture de toit (34) et étant recouvert par la peau de toit (20), **caractérisé en ce que** le module capteur (24) est disposé sur un cadre de toit (18) qui fait partie intégrante du module de toit et qui forme une structure de support du module de toit et qui forme une interface du module de toit avec une carrosserie de véhicule et auquel la peau de toit (20) est fixée.

2. Module de toit selon la revendication 1, **caractérisé en ce que** le module capteur (24) est disposé dans une zone de coin et/ou dans une zone de bord latérale par rapport à un plan longitudinal central vertical du toit ou dans une zone avant ou une zone arrière du module de toit au centre du véhicule.

3. Module de toit selon la revendication 1, **caractérisé en ce que** le module capteur (24) est disposé de manière centrale par rapport à un plan longitudinal central vertical du toit et à l'avant ou à l'arrière.

4. Module de toit selon l'une quelconque des revendications 1 à 3, **caractérisé en ce qu'**au moins une partie de la peau de toit (20) est transparente à un signal utilisé par le capteur d'environnement (26).

5. Module de toit selon l'une quelconque des revendications 1 à 4, **caractérisé en ce que** la peau de toit (20) forme un gradin (28), sur la face (40) duquel est formée une partie transparente pour le capteur d'environnement (26), ou une saillie, sur laquelle est formée une partie transparente pour le capteur d'environnement, ou une pente de toit, qui présente une partie transparente pour le capteur d'environnement.

6. Module de toit selon l'une quelconque des revendications 1 à 5, **caractérisé en ce qu'**une partie de peau de toit recouvrant le module capteur (24) est réalisée d'un seul tenant avec la partie de toit fixe (22) transparente.

7. Module de toit selon l'une quelconque des revendications 1 à 6, **caractérisé en ce que** l'élément de couvercle (36) est disposé au-dessus du module capteur (24) lorsqu'il est en position ouverte.

8. Module de toit selon l'une quelconque des revendications 1 à 7, **caractérisé par** plusieurs modules capteurs qui sont recouverts par la peau de toit (20), notamment quatre modules capteurs (24) disposés chacun dans une zone de coin du module de toit ou deux modules capteurs disposés chacun dans une zone de coin avant ou arrière du module de toit et/ou deux modules capteurs disposés chacun dans une zone de bord latérale du module de toit et/ou deux modules capteurs disposés chacun au centre d'une zone de bord du module de toit s'étendant dans la direction transversale du toit.

9. Module de toit selon l'une quelconque des revendications 1 à 8, **caractérisé en ce que** la peau de toit (20) recouvre des éléments fonctionnels pour la conduite autonome du véhicule en question, lesdits éléments fonctionnels comprenant un élément d'antenne, des éléments électroniques et/ou des éléments de gestion thermique.

10. Module de toit selon l'une quelconque des revendications 1 à 9, **caractérisé par** un feu de signalisation (32) qui permet d'indiquer un mode de fonctionnement du véhicule en question et qui est disposé à l'avant ou à l'arrière et qui est recouvert par la peau de toit (20) au moins par le haut.

11. Module de toit selon l'une quelconque des revendications 1 à 10, **caractérisé par** un dispositif de signalisation acoustique et/ou un microphone pour la communication du véhicule avec l'environnement du véhicule lorsqu'il est en mode de conduite autonome.

12. Module de toit selon l'une quelconque des revendications 1 à 11, **caractérisé en ce que** la peau de toit (20) recouvrant le module capteurs (24) forme une âme (44) opaque s'étendant centralement dans la direction longitudinale du toit ou dans la direction transversale du toit et séparant deux zones de toit transparentes l'une de l'autre.

13. Véhicule à moteur comprenant un module de toit selon l'une quelconque des revendications 1 à 12.
